# EUROPEAN PATENT APPLICATION

(11) **EP 3 348 149 A1**
(43) Date of publication of application: **18.07.2018**
(21) Application number: 18151540.4
(22) Date of filing: 13.01.2018
(51) Int. Cl.: A23L 15/00, A23L 33/16

(54) **CONSUMER SHELL EGG**

(30) Priority: 16.01.2017 CZ 201733292 U; 26.04.2017 CZ 201733644 U
(71) Applicant: AG Mailwald A.S., 57001 Benátky (CZ)
(72) Inventor: MAIWALD, Arnost, 56956 Cista (CZ)
(74) Representative: Kratochvil, Vaclav

(57) **Abstract**

The invention relates to a consumer shell egg, which contains at least 1,100 to 1,500 µg of iodine in 1 kg of egg mass, preferably 1,750 to 1,850 µg of iodine in 1 kg of egg mass or 1,100 to 1,500 µg of iodine and 280 to 450 µg of selenium in 1 kg of egg mass.

## Description

### Field of the Invention

The invention relates to a consumer shell egg.

### Background of the Invention

The existing shell eggs either do not contain high amount of iodine or iodine is supplemented with a feed mixture, wherein the previously known feed mixtures contain 0.5 to 1.5 mg of iodine per 1 kg of feed mixture. Often, calcium iodate is used, which is more suitable for incorporation into the premix, is less dusty, does not form crystals, is slightly more stable, but its main disadvantage is lower solubility and therefore lower digestibility. Salt iodization is currently used to overcome iodine deficiency. Recently, however, a reduction in salt use is being pushed through.

Selenium is an essential trace element which, despite its toxicity, is of great importance to the human organism. In the form of selenoproteins, it acts as an antioxidant that protects against the effects of free radicals and enhances the immune system. The margin between deficiency and toxicity is very narrow, but it depends on the form - source in which selenium is administered. There are two effective forms, selenomethionine - predominantly sources of plant origin, usability of 90 to 100 %, and selenocysteine - predominantly sources of animal origin, usability of about 15 %. Selenomethionine is formed in the body with sufficient selenium sources and various forms of precursors of methionine or directly methionine. The problem is that inorganic forms are only partially usable and the toxicity increases with increasing levels of administration. The most frequently used selenium sources are sodium selenite (3b.E8) and yeast enriched with sodium selenite, where selenium is bound in organic form, unfortunately only in part (3b8.10-13), the rest is again an inorganic form.

Salt iodization is currently used to overcome iodine deficiency. Recently, however, a reduction in salt use is being pushed through, while the use of antioxidants is recommended at the same time.

### Summary of the Invention

The above shortcomings are to a large extent eliminated by consumer shell egg according to this technical solution. Its essence is that it contains at least 1,100 to 1,500 µg of iodine in 1 kg of egg mass.

In a preferred embodiment it contains 1,750 to 1,850 µg of iodine in 1 g of egg content.

The increase in the content of iodine in egg is achieved by a feed mixture for laying hens containing 4.8 to 5.3 mg of potassium iodide in 1 kg of feed mixture.

In a preferred embodiment, the feed mixture further comprises algae of freshwater Chlorella genus or seawater Kelp genus. Both genera contain a very high amount of organically bound iodine that is important for the correct functioning of the thyroid gland. The algae dosage is minimally 100 g per tonne of feed mixture.

To achieve the level of 1,200 to 1,800 µg of iodine in 1 kg of egg mass, the level was selected of 4.8 to 5.3 mg per kg of iodine in 1 kg of feed mixture. As iodine source, potassium iodide (KI) was selected, which is approved by Commission Implementing Regulation (EU) 2015/861 under no. 3b201. Iodine was premixed in the form of premix pursuant to Act no. 91/1996 Sb. and implementing decrees. The thus prepared premix of additives is mixed according to the determined concentration of iodine in the premix and the premix dosage so that the resultant concentration of potassium iodide is 5 mg per kg of feed mixture.

Another, no less important step is the addition of algae with higher iodine content into the feed mixture.

The feed mixture thus prepared is administered to designated laying hens. In about 3 weeks, levels of iodine in egg rise to the desired level, but with a large variation range. After another 3 weeks, the levels stabilize. Hens accept feed mixture without any problems. The health condition of laying hens is more than good. The interim results correspond to the predicted values.

Such a iodine egg then calculated from the consumer basket adds about 1/6 to 1/3 of the recommended daily need for iodine.

Through approximately fivefold increase in the current iodine level to 4.8 to 5.3 mg, it is possible to increase the iodine levels in egg approximately 3 to 5 times. By using the source of potassium iodide, while at the same time increasing its level, the digestibility and higher iodine storage capacity in eggs are achieved.

In another preferred embodiment the egg contains 1,100 to 1,500 µg of iodine and 280 to 450 µg of selenium in 1 kg of egg mass.

The egg itself contains 60 to 70 µg of iodine and 15 to 20 µg of selenium.

The increase in the content is achieved by the feed mixture for laying hens, which contains 4.8 to 5.3 mg of iodine in the form of potassium iodide (3b2.01) in 1 kg of feed mixture as well as 280 to 450 µg of selenium in the form of hydroxy-analogue of selenomethionine (3b8.14).

To achieve the level of 1,100 to 1,500 µg of iodine in 1 kg of egg mass, the said level of iodine in 1 kg of feed mixture was selected. As iodine source, potassium iodide (KI) was selected, which is approved by Commission Implementing Regulation (EU) 2015/861 under no. 3b2.01.

To achieve the level of 15 to 20 µg of selenium in one egg, the hydroxy-analogue of selenomethionine (3b8.14) in the said level of selenium per 1 kg of feed mixture was selected, which is approved by Commission Implementing Regulation (EU) 2015/861 under no. 3b8.14.

Both iodine and selenium were premixed in the form of premix pursuant to Act no. 91/1996 Sb. and implementing decrees. The thus prepared premix of additives is mixed according to the determined concentration of iodine and selenium in the premix and the premix dosage so that the required concentration of iodine in the form of potassium iodide and selenium is achieved in the feed mixture. Another, no less important step is the addition into the feed mixture of seawater algae of Ascophyllum genus known as kelp with higher content of iodine and the common buckwheat achenes. Buckwheat achenes are a significant source of flavonoid rutin, and are also characterized by relatively high levels of selenium.

Another, no less important step is the addition into the feed mixture of seawater algae of Ascophyllum genus known as kelp with higher content of iodine and the common buckwheat achenes. Buckwheat achenes are a significant source of flavonoid rutin, and are also characterized by relatively high levels of selenium.

Hens accept feed mixture without any problems. The health condition of laying hens is more than good. The interim results correspond to the predicted values.

Such an iodine - selenium egg then calculated from the consumer basket adds about 16 to 30% of the recommended daily need for iodine and 14 to 28% of the need for selenium.

Through approximately fivefold increase in the iodine level to 4.8 to 5.3 mg, it is possible to increase the iodine levels in egg approximately 3 to 5 times. By using the source of potassium iodide, while at the same time increasing its level, the digestibility and higher storage capacity in eggs are achieved.

The whole source of selenium in the feed mixture is replaced (3b8.14) by hydroxy-analogue of selenomethionine. This allows to raise the level of selenium in the egg without the dangerous toxicity of selenium. All selenium in the egg will be in an organic form and at the same time its values will be 30 % higher.

The chosen combination of iodine and selenium in the egg appears to be well founded. Soils are generally poor in both these microelements. They are washed out of soils in the long term and their content is therefore insufficient in plants. In addition, plants are unable to bound larger amounts of iodine and selenium. Without human intervention, they are poorly represented in our consumer basket and the human population is undersaturated.

The resulting product after using such feed mixture is absolutely natural and will make it possible to supplement these deficiencies.

### Examples

### Example 1

Exemplary consumer shell egg contains 1,800 µg of iodine in 1 g of egg content.

Exemplary feed mixture for laying hens contains 5 mg of potassium iodide in 1 kg of feed mixture. This amount is sufficient to achieve the level of 1,200 to 1,800 µg of iodine in 1 kg of egg mass.

As iodine source, potassium iodide (KI) was chosen, which is approved by Commission Implementing Regulation (EU) 2015/861 under no. 3b201. Iodine was premixed in the form of premix pursuant to Act no. 91/1996 Sb. and implementing decrees. The thus prepared premix of additives is mixed according to the determined concentration of iodine in the premix and the premix dosage so that the resultant concentration of potassium iodide is 5 mg per kg of feed mixture.

In another embodiment, algae with higher iodine content are added to the feed mixture.

The feed mixture thus prepared is administered to designated laying hens. In about 3 weeks, levels of iodine in egg rise to the desired level, but with a large variation range. After another 3 weeks, the levels stabilize.

Hens accept feed mixture without any problems. The health condition of laying hens is more than good.

**Iodine content**

| | Control group | Monitored experimental group |
|---|---|---|
| Yolk | 833 µg/kg | 7,000 µg/kg |
| White | 27 µg/kg | 127 µg/kg |
| Mixture | 407 µg/kg | 1,800 µg/kg |

Such a iodine egg then calculated from the consumer basket adds about 1/6 to 1/3 of the recommended daily need for iodine.

### Example 2

The exemplary egg mass contains 1,250 µg of iodine and 360 µg of selenium in 1 kg of egg mass. One egg contains 60 to 70 µg of iodine and 15 to 20 µg of selenium.

To achieve the level of 1,100 to 1,500 µg of iodine in 1 kg of egg mass, the said level of iodine in 1 kg of feed mixture was selected. As iodine source, potassium iodide (KI) was selected, which is approved by Commission Implementing Regulation (EU) 2015/861 under no. 3b2.01.

To achieve the level of 15 to 20 µg of selenium in one egg, the hydroxy-analogue of selenomethionine (3b8.14) in the said level of selenium per 1 kg of feed mixture was selected, which is approved by Commission Implementing Regulation (EU) 2015/861 under no. 3b8.14.

Iodine and selenium were premixed in the form of premix pursuant to Act no. 91/1996 Sb. and implementing decrees. The thus prepared premix of additives is mixed according to the determined concentration of iodine and selenium in the premix and the premix dosage so that the resultant concentration of iodine in the form of potassium iodide is 5 mg per kg of feed mixture and that of selenium 350 µg per kg of feed mixture.

Another, no less important step is the addition into the feed mixture of seawater algae of Ascophyllum genus known as kelp with higher content of iodine and the common buckwheat achenes. Buckwheat achenes are a significant source of flavonoid rutin, and are also characterized by relatively high levels of selenium.

The thus prepared feed mixture is administered to designated laying hens. Hens accept feed mixture without any problems. The health condition of laying hens is more than good.

In about 3 weeks, levels of iodine and selenium in egg rise to the desired level.

**Iodine content**

| | Control group | Monitored experimental group |
|---|---|---|
| Yolk | 833 µg/kg | 5,000 (4,000 to 6,000) µg/kg |
| White | 27 µg/kg | 127 µg/kg |
| Mixture | 407 µg/kg | 1,250 (1,100 to 1,500) µg/kg |

**Selenium content**

| | Control group | Monitored experimental group |
|---|---|---|
| Yolk | 330 to 500 µg/kg | 540 (430 to 600) µg/kg |
| White | 100 to 120 µg/kg | 135 (120 to 150) µg/kg |
| Mixture | 210 to 260 µg/kg | 360 (280 to 450) µg/kg |

### Industrial applicability

This technical solution will be used especially for eggs delivered to school canteens, catering facilities, fitness centres and health food stores. Customers in ordinary shops will appreciate reducing the use of edible salt and replacing the iodine subsidy in the body through eggs as well as the beneficial effect of increased selenium content on the human body. The product will allow you to secure your intake of safe, natural source of iodine and selenium via healthy, fresh food and to have the regular and correct supply of these microelements fully in your hands.

## Claims

1. A consumer shell egg ***characterized in that*** it contains at least 1,100 to 1,500 µg of iodine in 1 kg of egg mass.

2. The consumer shell egg according to Claim 1 ***characterized in that*** it contains 1,750 to 1,850 µg of iodine in 1 kg of egg mass.

3. The consumer shell egg according to Claim 1 ***characterized in that*** it contains 1,100 to 1,500 µg of iodine and 280 to 450 µg of selenium in 1 kg of egg mass.

4. The consumer shell egg according to Claim 3 ***characterized in that*** it contains 60 to 70 µg of iodine and 15 to 20 µg of selenium.
